**Europäisches Patentamt**

(19) **European Patent Office**

**Office européen des brevets**

(11) Veröffentlichungsnummer : **0 041 609
B1**

(12) **EUROPÄISCHE PATENTSCHRIFT**

(45) Veröffentlichungstag der Patentschrift :
22.06.83

(51) Int. Cl.³ : **B 60 N   3/02, F 16 B 21/07**

(21) Anmeldenummer : **81103157.4**

(22) Anmeldetag : **28.04.81**

(54) **Befestigungsvorrichtung für Haltegriffe, Armlehnen od.dgl. an der Karosseriewand von Fahrzeugen.**

(30) Priorität : **07.06.80 DE 3021552**

(43) Veröffentlichungstag der Anmeldung :
**16.12.81 Patentblatt 81/50**

(45) Bekanntmachung des Hinweises auf die Patenterteilung : **22.06.83 Patentblatt 83/25**

(84) Benannte Vertragsstaaten :
**DE FR GB IT SE**

(56) Entgegenhaltungen :
**DE A 1 755 749
DE A 2 200 044
DE A 2 531 368
US A 2 358 890
US A 2 943 373**

(73) Patentinhaber : **Gebr. Happich GmbH
Postfach 10 02 49 Clausenbrücke 1
D-5600 Wuppertal 1 (DE)**

(72) Erfinder : **Janz, Joachim
Jägerhofstrasse 116b
D-5600 Wuppertal 1 (DE)**
Erfinder : **Svejkovsky, Ulrich
Heinrich-Hauser-Strasse 56
D-5600 Wuppertal 12 (DE)**

(74) Vertreter : **Rehders, Jochen, Dipl.-Ing.
c/o Fa. Gebr. Happich GmbH
D-5600 Wuppertal 1 (DE)**

Befestigungsvorrichtung für Haltegriffe, Armlehnen od. dgl. an der Karosseriewand von Fahrzeugen

Die Erfindung geht aus von einer Befestigungsvorrichtung der im Oberbegriff des Anspruchs 1 angegebenen und als bekannt vorausgesetzten Art.

Die an der Karosseriewand von Fahrzeugen zu befestigenden Teile, wie Haltegriffe, Armlehnen od. dgl., werden üblicherweise an der Karosseriewand angeschraubt. Dabei müssen die Teile, um die Schraublöcher zu finden, sehr sorgfältig positioniert werden, was als langwierig und lästig empfunden wird. Von besonderem Nachteil bei der herkömmlichen Befestigungsart ist aber der durch die erforderliche Schraubarbeit bedingte beträchtliche Montageaufwand mit den daraus resultierenden Kosten.

Bei einer verbesserten Befestigungsvorrichtung nach der DE-C-24 08 238 ist vorgesehen, daß die Befestigung an mindestens zwei Stellen erfolgt und die Verbindung in einem Fall über einen in einen Durchbruch einrenkbaren Stift vorgenommen wird. Durch diese bekannte Maßnahme kann ein Haltegriff, eine Armlehne od. dgl. zwar lagefixiert vormontiert werden, jedoch muß die endgültige Festlegung wiederum in arbeitsaufwendiger und damit kostenintensiver Weise schraubgemäß vorgenommen werden.

Der Erfindung liegt nun die Aufgabe zugrunde, eine Befestigungsvorrichtung zu schaffen, durch die eine wesentlich einfachere und schnellere Montage für Haltegriffe, Armlehnen od. dgl. ermöglicht wird.

Gemäß der Erfindung wird diese Aufgabe gelöst durch einen in eine Aufnahme einsteckbaren Steckzapfen und zumindest einen etwa senkrecht zu diesem ausgerichteten Rastzapfen, der in eine eine Auszugssicherung aufweisende Aufnahme einsteckbar ist.

Auf diese Weise kann nunmehr die Befestigung eines Haltegriffes, einer Armlehne od. dgl. Bauteils an den Verbindungsstellen durch schnell und einfach durchzuführendes Einstecken der Zapfen in die Aufnahmen erfolgen. Im allgemeinen wird man zunächst den Steckzapfen, der aus einem Winkelhaken bestehen kann, in eine seiner Querschnittsfläche angepaßte Aufnahme einstecken, das Bauteil in Richtung zur Karosseriewand schwenken und gleichzeitig den Rastzapfen in die zugehörige Aufnahme einstecken. Durch die etwa senkrechte Anordnung des Steckzapfens zum Rastzapfen wird der erstere selbsttätig gehalten, so daß nur für den Rastzapfen eine diesen in axialer Richtung sichernde Auszugssperre vorzusehen ist. Die Erfindung besitzt noch die besonderen Vorteile, daß das Einstecken der Zapfen in die Aufnahmen unter Sichtkontrolle durchführbar ist, also ein Suchen von Durchbrüchen oder ein Arbeiten mit zwischengeschalteten Schablonen entfällt. Überhaupt ist die Zuhilfenahme von Werkzeugen für die Verbindungen nicht erforderlich. Auch sind die Befestigungen bzw. Verbindungsstellen an der Außenseite des Handgriffes, der Armlehne od. dgl. nicht sichtbar.

Erfindungsgemäß kann die Auszugssicherung zwei den Rastzapfen radial kontaktierende Federschenkel aufweisen, die in Einsteckrichtung des Rastzapfens konvergieren. Die Federschenkel behindern einerseits das Einstecken des Steckzapfens in keiner Weise, verhindern andererseits aber zuverlässig, daß der Steckzapfen wieder aus der Aufnahme herausgezogen werden kann, zumal die Winkelstellung der Federschenkel selbstverständlich so gewählt ist, daß Selbsthemmung besteht.

Eine bevorzugte Ausgestaltung der Erfindung wird darin gesehen, daß die Aufnahme für den Rastzapfen eine aus Federstahl bestehende Klammer ist, die eine im wesentlichen U-förmige Ausbildung mit konvergierende Federschenkel bildenden Seitenschenkeln besitzt, deren sie miteinander verbindende Steg ein das Durchstecken des Rastzapfens ermöglichendes Langloch aufweist, wobei die Federschenkel zumindest einseitig gegenüber dem Langloch verkürzt sind, derart, daß sie in diesem Bereich den Rastzapfen nicht zu kontaktieren vermögen. Diese, Teil der Befestigungsvorrichtung bildende Klammer ist ein relativ kleines kostengünstiges Bauteil. Die besondere Ausbildung der Klammer ermöglicht zum einen eine schnelle unproblematische Montage des Rastzapfens durch lediglichles Einstecken, ermöglicht zum andern aber auch eine äußerst schnell und bequem durchzuführende Demontage. Hierzu ist es lediglich erforderlich, den in axialer Richtung gesicherten Rastzapfen quer zu seiner Längsachse zu verschieben, und zwar so weit, bis er von den Federschenkeln nicht mehr kontraktiert wird, wonach er aus der Aufnahme herausgezogen werden kann. Um ein ungewolltes Verschieben zu verhindern, können erfindungsgemäß das Langloch bereichsweise verengende Nocken vorgesehen sein, welche überwindbare Sperren bilden.

Der Rastzapfen kann eine im wesentlichen glatte Oberfläche aufweisen und wird, wie Versuche gezeigt haben, dennoch zuverlässig durch die Federschenkel gegen ein Ausziehen gesichert. Die glatte Oberfläche des Rastzapfens ermöglicht eine stufenlose Einschiebweite und hilft damit, etwaige Toleranzen zu überbrücken. In besonderen Einbaufällen kann es aber von Vorteil sein, wenn der Rastzapfen, gemäß einem weiteren Merkmal der Erfindung, durch Riefen oder sägezahnartige Profilierung gebildete Raststufen aufweist. Bei dieser Ausbildungsform besteht auch die Möglichkeit, die Auszugssicherung lediglich mit einer Sperrklinke auszubilden.

Gemäß einer Weiterbildung der Erfindung ist die Aufnahme für den Rastzapfen unter Selbstsicherung in ein Wandungsloch einsetzbar. Die Selbstsicherung kann eine Klipsverbindung sein, wobei sicherzustellen ist, daß sie die zu erwartenden Zugkräfte aufnehmen kann, was am einfachsten durch eine entsprechende Einsteckrichtung zu erreichen ist.

Nach einem weiteren Merkmal der Erfindung ist vorgesehen, daß im Abstand vom Rastzapfen und parallel zu diesem verlaufend, zumindest ein Haltezapfen angeordnet ist, der unter Selbstsicherung in ein Wandungsloch einsetzbar ist. Diese Maßnahme ist besonders bei größeren Bauteilen, wie mit Handgriffen kombinierten Armlehnen, von Vorteil, bei denen eine Zweipunktfestlegung nicht stabil genug erscheint. Dabei kann der Haltezapfen aus elastisch vorformbarem Material bestehen und an seinem freien Endbereich unter Bildung eines ringförmigen Halsansatzes in eine kegelförmige Verjüngung auslaufen und nach Einrasten in das Wandungsloch in diesem mit dem Halsansatz Klemmsitz einnehmen. Alternativ kann der Haltezapfen aber auch ratschenartig ausgebildet sein. Auf jeden Fall sollte die Selbstsicherung des Haltezapfens so konzipiert sein, daß sie bei einer bestimmten Abzugskraft überwindbar ist, um die angestrebte einfache Demontierbarkeit einer Armlehne od. dgl. nicht zu behindern.

Die Aufnahme für den Steckzapfen kann im einfachsten Fall ein Wandungsdurchbruch sein. Je nach Art des verwendeten Materials und der möglichen Toleranzen können jedoch hierbei klappergeräusche entstehen, so daß gemäß der Erfindung zweckmäßigerweise die Aufnahme für den Steckzapfen ein diesen umgreifender Klipskörper ist. Dabei ist es von besonderem Vorteil, daß der Steckzapfen oder der Klipskörper auszugssichernde Nocken, Warzen od. dgl. aufweist. Auf diese Weise ist sichergestellt, daß der Steckzapfen bei einer elastischen Verformung des Haltegriffes, der Armlehne oder dergleichen nicht aus der Aufnahme herausgezogen werden kann. Die Nocken, Warzen od. dgl. lassen sich andererseits aber problemlos so anordnen, daß sie ein gewolltes Herausziehen des Steckzapfens nicht behindern.

Die Erfindung sieht vorzugsweise vor, daß der Steckzapfen und/oder der Rastzapfen und/oder der Haltezapfen an dem an der Karosseriewand zu befestigenden Teil, wie Haltegriff oder Armlehne angeordnet ist bzw. sind. Sind sämtliche Zapfen der Befestigungsvorrichtung an dem Bauteil angeordnet, so sind in die Karosseriewand lediglich die Wandungslöcher einzuarbeiten.

Schließlich kann vorgesehen sein, daß der Steckzapfen und/oder der Rastzapfen und/oder der Haltezapfen einstückig mit einer Verstärkungseinlage ausgebildet ist bzw. sind, welche das an der Karosseriewand zu befestigende Teil, wie ein Haltegriff oder eine Armlehne, aussteift. Durch diese Maßnahme kann der Konstruktive Aufbau der Befestigungsvorrichtung auf wenige Teile beschränkt und damit vereinfacht werden.

Ausführungsbeispiele der Erfindung sind in den Zeichnungen dargestellt. Es zeigen

Figur 1 ein erstes Ausführungsbeispiel der Befestigungsvorrichtung für einen Haltegriff,

Figur 2 ein zweites Ausführungsbeispiel der Befestigungsvorrichtung für eine Armlehnen-Haltegriffkombination,

Figur 3 eine vergrößerte Einzelheit nach Fig. 2,

Figur 4 eine weitere Einzelheit nach Fig. 2 und

Figur 5 ein Einbaubeispiel.

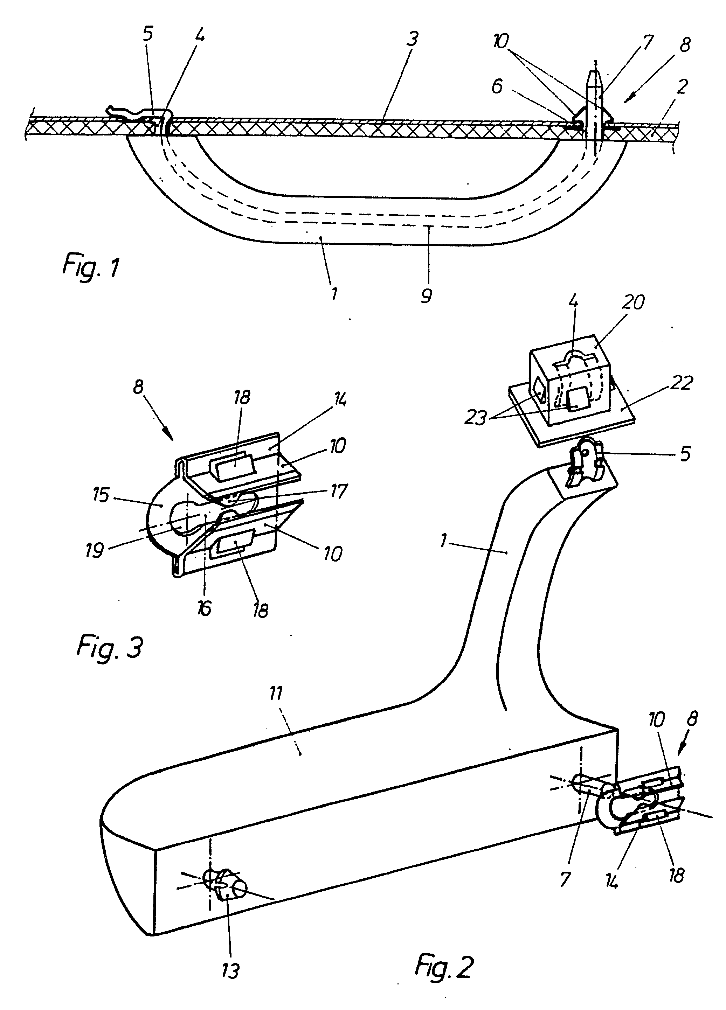

Fig. 1 zeigt einen Haltegriff 1, der an einer eine Polsterschicht 2 tragenden Karosseriewand 3 befestigt ist. Die Befestigung erfolgt hier an zwei Stellen, und zwar einmal über einen in eine Aufnahme 4 einsteckbaren Steckzapfen 5 und einmal über einen ebenfalls in eine Aufnahme 6 einsteckbaren Rastzapfen 7, wobei die Aufnahme 6 eine Auszugssicherung 8 aufweist. Im dargestellten Ausführungsbeispiel sind der Steckzapfen 5 und der Rastzapfen 7 am Haltegriff 1 angeordnet und vorzugsweise einstückig mit einer den Haltegriff 1 aussteifenden Einlage 9, die aus einem Blechband bestehen kann, ausgebildet. Wie die Zeichnung zeigt, ist der Steckzapfen 5 hakenförmig ausgebildet, so daß sein tragender bzw. auszugssichernder Teil etwa parallel zur Karosseriewand 3 verläuft. Der Rastzapfen 7 hingegen ist etwa senkrecht zum Steckzapfen 5 und zur Karosseriewand 3 ausgerichtet, so daß nur dieser gegen Auszug gesichert werden muß, was durch die Auszugssicherung 8 erfolgt. Die Auszugssicherung 8 umfaßt zwei Federschenkel 10, die den Rastzapfen 7 zwischen sich einschließen. Die Federschenkel 10 divergieren in Einsteckrichtung des Rastzapfens 7, und der Abstand ihrer freien Enden voneinander ist im unbelasteten Zustand kleiner als die Dicke oder der Durchmesser des Rastzapfens 7.

Bei der Montage des Haltegriffes 1 wird so verfahren, daß zunächst der Steckzapfen 5 in die Aufnahme 4 eingesteckt, dann der Haltegriff 1 gegen die Karosseriewand 3 geschwenkt und dabei der Rastzapfen in die als oder mit einer Auszugssicherung 8 ausgebildete Aufnahme 6 eingesteckt wird. Die Montageschritte sind äußerst schnell und einfach durchzuführen. Beim Einstecken des Rastzapfens 7 werden die Federschenkel 10 auseinandergespreizt, so daß der Rastzapfen 7 bis zur Anlage des Haltegriffes 1 an der Karosseriewand 3 oder deren Polsterschicht 2 problemlos die Aufnahme 6 durchdringen kann. Aufgrund der Federkraft und des Selbsthemmung bewirkenden Anstellwinkels der Federschenkel 10 ist es aber nicht möglich, den Rastzapfen wieder aus der Auszugssicherung 8 herauszuziehen, so daß eine zuverlässige Festlegung des Haltegriffes 1 gewährleistet ist. Andererseits ist aber für eine Demontage Vorsorge dafür getroffen, daß der Rastzapfen 7 durch gewolltes Verschieben quer zu seiner Längsachse aus dem Eingriff der Federschenkel 10 gebracht werden kann.

Fig. 2 zeigt eine Armlehne 11 mit einem integrierten Haltegriff 1. Diese Armlehnen-Haltegriff-Kombination ist insbesondere zur Anordnung an eine Tür 12 in der in Fig. 5 beispielhaft dargestellten Art bestimmt. Die Befestigung erfolgt hier an drei Stellen, und zwar über den schon anhand der Fig. 1 beschriebenen Steckzapfen 5, den schon beschriebenen Rastzapfen 7 sowie zusätzlich über einen Haltezapfen 13, der lösbar in ein nicht dargestelltes Wandungsloch der Karosseriewand 3 einklipsbar ist.

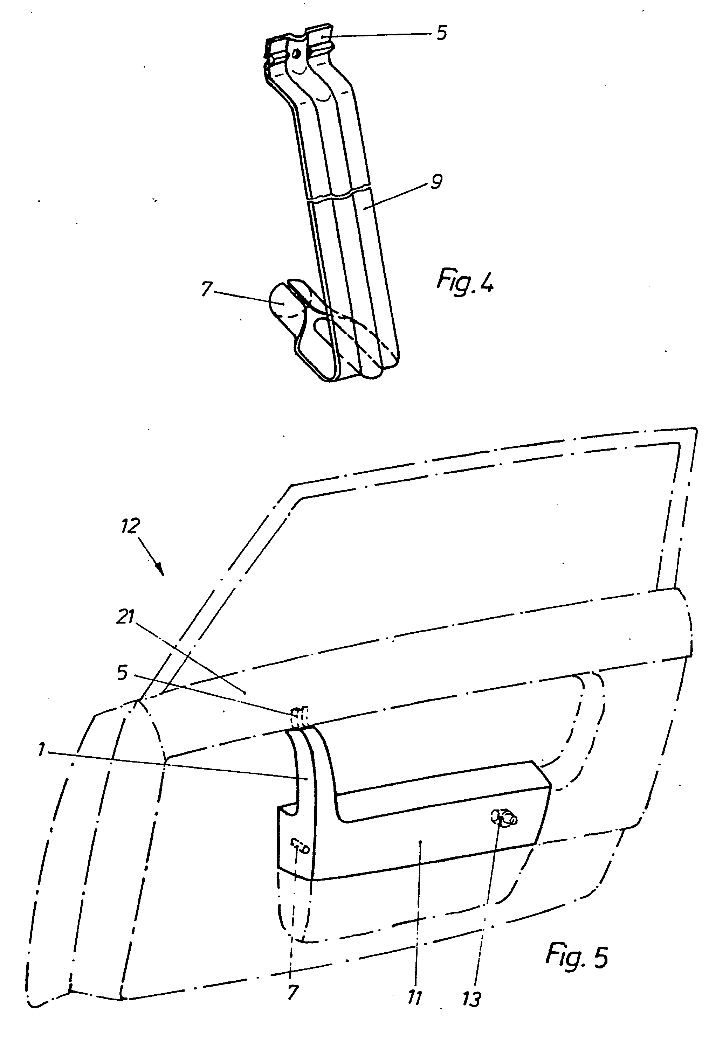

Die Auszugssicherung 8 für den Rastzapfen 7 nach Fig. 2 besteht aus einer aus Federstahl gebildeten Klammer 14, die in Fig. 3 im vergrößerten Maßstab dargestellt ist. Die Klammer 14 umfaßt einen Steg 15 mit an den Seitenrändern hochgestellten und schräg gegeneinander geneigten Seitenschenkeln, welche Federschenkel 10 zur Radialkontraktion des Rastzapfens 7 bilden. Zum Durchlaß des Rastzapfens 7 besitzt der Steg 15 ein Langloch 16, welches durch Nocken 17 bereichsweise verengt ist. Die Klammer 14 ist unter Selbstsicherung in ein nicht dargestelltes Wandungsloch einsetzbar. Die Selbstsicherung ist gewährleistet durch den Randbereich des Wandungsloches hintergreifende Rastfederarme 18, die aus den Federschenkeln 10 freigeschnitten und herausgestellt sind. Das Langloch 16 einendig eine Öffnungserweiterung 19 auf. Wenn der Rastzapfen 7 durch gewolltes seitliches Verschieben, wobei der durch die Nocken 17 gebildete Widerstand überwunden werden muß, sich im Bereich der Öffnungserweiterung 19 befindet, steht er nicht mehr im Eingriff mit den Federschenkeln 10, so daß er zum Zwecke einer Demontage aus der Aufnahme 6 gezogen werden kann.

In Fig. 2 ist weiterhin dargestellt, daß die Aufnahme 4 für den Steckzapfen 5 ein diesen umgreifender Klipskörper 20 sein kann. Der Klipskörper 20 besitzt eine Aufnahme 4, die der Querschnittsform und gebogenen Ausbildung des Steckzapfens 5 angepaßt ist. Der Klipskörper 20 ist seinerseits in ein Wandungsloch, beispielsweise in ein im Querriegel 21 der Tür 12 nach Fig. 5 eingearbeitetes Wandungsloch unter Selbstsicherung einsetzbar. Hierfür besitzt der Klipskörper einen sich einseitig an der Karosseriewand 3 abstützenden Flansch und Rastnocken 23, die die Karosseriewand 3 am Randbereich des Wandungsloches hintergreifen.

Der Haltezapfen 13 kann klips-, dübel- oder ratschenartig ausgebildet und in ein ebenfalls nicht dargestelltes Wandungsloch der Karosseriewand 3 einsteckbar sein. Der Haltezapfen 13 ist derart ausgebildet, daß er bei einer Auszugskraft, die größer als die bei Normalgebrauch auf die Armlehne 11 einwirkenden Kräfte ist, wieder aus dem Wandungsloch herausgezogen werden kann.

Geht man davon aus, daß die Klammer 14 und der Klipskörper 20 bereits vormontiert sind, so ergibt sich für die Armlehnen-Haltegriff-Kombination nach Fig. 2 eine Montage, die mit der nach Fig. 1 weitgehend vergleichbar ist. So wird zunächst der Steckzapfen 5 in die Aufnahme 4 des Klipskörpers 20 unter einer leichten Schwenkbewegung eingesteckt. Alsdann werden sowohl der Rastzapfen 7 als auch der Haltezapfen 13 nacheinander oder gemeinsam in ihre Aufnahmen eingesteckt. Bei der Demontage wird zunächst der Haltezapfen 13 aus seiner Aufnahme herausgezogen. Alsdann wird die gesamte Armlehnen-Haltegriff-Kombination verschwenkt, bis sich der Rastzapfen 7 in der Öffnungserweiterung 19 befindet, wonach er problemlos aus der Aufnahme 6 herausgezogen werden kann. Schließlich wird der Steckzapfen 5 aus seiner Aufnahme 4 herausgezogen.

Der Haltegriff 1 kann unter Belastung einer elastischen Verformung unterliegen, was dazu führen kann, daß der Steckzapfen 5 aus der Aufnahme 4 teilweise herausbewegt wird. Um dies zu verhindern, können ineinandergreifende Nocken od. dgl. sowohl an dem Steckzapfen 5 als auch an dem Klipskörper 20 vorgesehen sein, die aber ein gewolltes Herausziehen des Steckzapfens nicht behindern. In Fig. 2 ist an dem Steckzapfen 5 ein warzenförmiger Nocken 24 angedeutet.

Fig. 4 zeigt eine aus einem verformten Blechstreifen gebildete Verstärkungseinlage 9 für einen Haltegriff 1. Es ist ersichtlich, daß einstückig mit der Verstärkungseinlage 9 zum einen der Steckzapfen 5 und zum andern der Rastzapfen 7 ausgebildet ist. Der Rastzapfen 7 besitzt dabei eine durch Rollen gebildete hülsenförmige Gestaltung.

**Ansprüche**

1. Befestigungsvorrichtung für Haltegriffe (1), Armlehnen (11) od. dgl. an der Karosseriewand (3) von Fahrzeugen, wobei die Befestigung an zumindest zwei Stellen erfolgt, gekennzeichnet durch einen in eine Aufnahme (4) einsteckbaren Steckzapfen (5) und zumindest einen etwa senkrecht zu diesem ausgerichteten Rastzapfen (7), der in eine eine Auszugssicherung (8) aufweisende Aufnahme (6) einsteckbar ist.

2. Befestigungsvorrichtung nach Anspruch 1, dadurch gekennzeichnet, daß die Auszugssicherung (8) zwei den Rastzapfen (7) radial kontaktierende Federschenkel (10) aufweist, die in Einsteckrichtung des Rastzapfens (7) konvergieren.

3. Befestigungsvorrichtung nach Anspruch 1 oder 2, dadurch gekennzeichnet, daß die Aufnahme (6) für den Rastzapfen (7) eine aus Federstahl bestehende Klammer (14) ist, die eine im wesentlichen U-förmige Ausbildung mit konvergierende Federschenkel (10) bildenden Seitenschenkeln besitzt, deren sie miteinander verbindender Steg (15) ein das Durchstecken des Rastzapfens (7) ermöglichendes Langloch (16) aufweist, wobei die Federschenkel (10) verkürzt sind, derart, daß sie in diesem Bereich den Rastzapfen (7) nicht zu kontaktieren vermögen.

4. Befestigungsvorrichtung nach einem oder mehreren der Ansprüche 1 bis 3, dadurch gekennzeichnet, daß der Rastzapfen (7) eine im wesentlichen glatte Oberfläche aufweist.

5. Befestigungsvorrichtung nach einem oder mehreren der Ansprüche 1 bis 3, dadurch gekennzeichnet, daß der Rastzapfen (7) durch Riefen oder sägezahnartige Profilierung gebildete Raststufen aufweist.

6. Befestigungsvorrichtung nach einem oder mehreren der Ansprüche 1 bis 5, dadurch gekennzeichnet, daß die Aufnahme (6) für den Rastzapfen (7) unter Selbstsicherung in ein Wandungsloch einsetzbar ist.

7. Befestigungsvorrichtung nach einem oder mehreren der Ansprüche 1 bis 6, gekennzeichnet durch zumindest einen im Abstand vom Rastzapfen (7) angeordneten und parallel zu diesem verlaufenden Haltezpafen (13), der unter Selbstsicherung in ein Wandungsloch einsetzbar ist.

8. Befestigungsvorrichtung nach Anspruch 7, dadurch gekennzeichnet, daß der Haltezapfen (13) aus elastisch verformbarem Material besteht und an seinem freien Endbereich unter Bildung eines ringförmigen Halsansatzes in eine kegelförmige Verjüngung ausläuft und nach Einrasten in das Wandungsloch in diesem mit dem Halsansatz Klemmsitz einnimmt.

9. Befestigungsvorrichtung nach Anspruch 7, dadurch gekennzeichnet, daß der Haltezapfen (13) ratschenartig ausgebildet ist.

10. Befestigungsvorrichtung nach einem oder mehreren der Ansprüche 1 bis 9, dadurch gekennzeichnet, daß die Aufnahme (4) für den Steckzapfen (5) ein diesen umgreifender Klipskörper (20) ist, der seinerseits in ein Wandungsloch einklipsbar ist.

11. Befestigungsvorrichtung, nach den Ansprüchen 1 und 9, dadurch gekennzeichnet, daß der Steckzapfen (5) oder der Klipskörper (20) auszugssichernde Nocken (24), Warzen od. dgl. aufweist.

12. Befestigungsvorrichtung nach einem oder mehreren der Ansprüche 1 bis 11, dadurch gekennzeichnet, daß der Steckzapfen (5) und/oder der Rastzapfen (7) und/oder der Haltezapfen (13) an dem an der Karosseriewand (3) zu befestigenden Teil, wie Haltegriff (1) oder Armlehne (11) angeordnet ist bzw. sind.

13. Befestigungsvorrichtung nach einem oder mehreren der Ansprüche 1 bis 12, dadurch gekennzeichnet, daß der Steckzapfen (5) und/oder der Rastzapfen (7) und/oder Haltezapfen (13) einstückig mit einer Verstärkungseinlage (9) ausgebildet ist bzw. sind, welche das an der Karosseriewand (3) zu befestigende Teil, wie ein Haltegriff (1) oder eine Armlehne (11) aussteift.

14. Befestigungsvorrichtung nach Anspruch 3, gekennzeichnet durch das Langloch (16) bereichsweise verengende Nocken (17).

## Claims

1. A fastening system for a hand-grip (1), an arm-rest (11) or the like to be fastened at at least two points to the wall (3) of a vehicle body, characterized by a pintle (5) insertable into a receptable (4) and by a stop-pin (7) which extends in a direction substantially perpendicular to the pintle and is insertable into a retaining element (6) provided with withdrawal-inhibiting means (8).

2. A fastening system according to claim 1, characterized in that the withdrawal-inhibiting means (8) include two spring webs (10) for radially contacting the stop-pin (7), and in that the webs converge along the stop-pin's (7) direction of insertion.

3. A fastening system according to claim 1 or claim 2, characterized in that the retaining element (6) for the stop-pin (7) is a spring-steel clip (14) of substantially U-shaped configuration the legs of which form the converging spring webs (10), that the base connecting the legs is provided with an elongate hole (16) for the stop-pin's (7) passage therethrough, and in that the spring webs (10) are shortened so that in this region they cannot contact the stop-pin (7).

4. A fastening system according to any one or more of the claims 1 to 3, characterized in that the surface of the stop-pin (7) is a substantially smooth one.

5. A fastening system according to any one or more of the claims 1 to 3, characterized in that the stop-pin (7) is provided with notches formed by grooves or a saw-tooth-like profile.

6. A fastening system according to any one or more of the claims 1 to 5, characterized in that the retaining element (6) for the stop-pin (7) is self-lockingly insertable into an aperture of the body wall.

7. A fastening system according to any one or more of the claims 1 to 6, characterized by at least one holding pin (13) spacedly arranged from yet extending parallel with the stop-pin (7) and being self-lockingly insertable into an aperture of the body wall.

8. A fastening system according to claim 7, characterized in that the holding pin (13) consists of a resiliently deformable substance, that its free end portion is provided with an annular projection beyond which it tapers towards the free end, and in that the annular projection provides, when the pin has been inserted into said aperture of the body wall, an interference fit therewith.

9. A fastening system according to claim 7, characterized in that the holding pin (13) is constructed like a ratch.

10. A fastening system according to any one or more of the claims 1 to 9, characterized in that the receptacle (4) for the pintle (5) is a clip (20) arranged to enclose the latter and itself to be clipped into an aperture of the body wall.

11. A fastening system according to any one or more of the claims 1 to 9, characterized in that the pintle (5) or the clip (20) is provided with withdrawal-inhibiting dogs (24), nipples or the like.

12. A fastening system according to any one or more of the claims 1 to 11, characterized in that the pintle (5) and/or the stop-pin (7) and/or the holding pin (13) is, or are, arranged on the fitment, such as the hand-grip (1) or the arm-rest (11), to be fastened to the wall (3) of the vehicle body.

13. A fastening system according to any one or more of the claims 1 to 12, characterized in that the pintle (5) and/or the stop-pin (7) and/or the holding pin (13) is, or are, formed integrally with a reinforcing insert (9) serving to strengthen the fitment, such as the hand-grip (1) or the arm-rest (11), to be fastened to the wall (3) of the vehicle body.

14. A fastening system according to claim 3, characterized by cams (17) constricting sections of the elongate hole (16).

## Revendications

1. Dispositif de fixation de poignée (1), d'accoudoir (11) ou analogue sur la paroi (3) de la carrosserie de véhicules automobiles, la fixation étant réalisée en au moins deux endroits, caractérisé par un élément d'emboîtement (5) pouvant être inséré dans un logement (4) et par au moins un tenon d'arrêt (7) orienté sensiblement perpendiculairement par rapport à l'élément d'emboîtement pouvant être enfoncé dans un logement (6) comportant un dispositif de retenue (8) empêchant que l'on puisse le retirer.

2. Dispositif de fixation selon la revendication 1, caractérisé en ce que le dispositif de retenue (8) comprend deux branches à ressort (10) qui viennent en contact radial avec le tenon d'arrêt (7) et qui convergent en direction de l'enfoncement de ce tenon d'arrêt (7).

3. Dispositif de fixation selon la revendication 1 ou 2, caractérisé en ce que le logement (6) destiné au tenon d'arrêt (7) est constitué par une agrafe (14) en acier à ressort, dont la constitution est sensiblement en forme de « U » avec des branches latérales formant des branches à ressort (10) convergentes, et dont la partie (15) qui réunit les branches l'une à l'autre comprend un trou allongé (16) permettant le passage du tenon d'arrêt (7), les branches à ressort (10) étant raccourcies de manière qu'elles ne puissent pas établir un contact avec le tenon d'arrêt (7) dans cette zone.

4. Dispositif de fixation selon une ou plusieurs des revendications 1 à 3, caractérisé en ce que le tenon d'arrêt (7) présente une surface sensiblement lisse.

5. Dispositif de fixation selon une ou plusieurs des revendications 1 à 3, caractérisé en ce que le tenon d'arrêt (7) comprend des gradins d'arrêt formés par des stries ou un profilage en dents de scie.

6. Dispositif de fixation selon une ou plusieurs des revendications 1 à 5, caractérisé en ce que le logement (6) destiné au tenon d'arrêt (7) peut être disposé dans un trou de la paroi au moyen d'un dispositif de retenue en empêchant l'extraction.

7. Dispositif de fixation selon une ou plusieurs des revendications 1 à 6, caractérisé par au moins un tenon de retenue (13) disposé à une certaine distance du tenon d'arrêt (7) et parallèlement à celui-ci, que l'on peut disposer dans un trou de la paroi au moyen d'un dispositif de retenue en empêchant l'extraction.

8. Dispositif de fixation selon la revendication 7, caractérisé en ce que le tenon de retenue (13) est réalisé en un matériau élastiquement déformable et comprenant à son extrémité une partie amincie de forme conique formant un collet de forme annulaire, et qui après enfoncement dans le trou de la paroi occupe une position serrée au moyen de son collet.

9. Dispositif de fixation selon la revendication 7, caractérisé en ce que le tenon de retenue (13) est constitué sous forme d'un cliquet.

10. Dispositif de fixation selon une ou plusieurs des revendications 1 à 9, caractérisé en ce que le logement (4) destiné à l'élément d'emboîtement (5) est constitué par un organe de clipsage (20) qui l'entoure et qui peut être enclipsé de son côté dans un trou de la paroi.

11. Dispositif de fixation selon les revendications 1 et 9, caractérisé en ce que l'élément d'emboîtement (5) ou l'organe de clipsage (20) comprend des saillies (24) des bourrelets ou analogues constituant un dispositif de retenue contre l'arrachement.

12. Dispositif de fixation selon une ou plusieurs des revendications 1 à 11, caractérisé en ce que l'élément d'emboîtement (5) et/ou le tenon d'arrêt (7) et/ou le tenon de retenue (13) est ou sont montés sur le composant à fixer sur la paroi (3) de la carrosserie, tel qu'une poignée (1) ou un accoudoir (11).

13. Dispositif de fixation selon une ou plusieurs des revendications 1 à 12, caractérisé en ce que l'élément d'emboîtement (5) et/ou le tenon d'arrêt (7) et/ou le tenon de retenue (13) est ou sont d'un seul tenant avec un élément de renfort (9) qui rend rigide le composant à fixer à la paroi (3) de la carrosserie, tel qu'une poignée (1) ou un accoudoir (11).

14. Dispositif de fixation selon la revendication 3, caractérisé par des saillies (17) rétrécissant localement le trou allongé (16).

Fig. 1

Fig. 3

Fig. 2

*Fig. 4*

*Fig. 5*